(19) Europäisches Patentamt
European Patent Office
Office européen des brevets

(11) Veröffentlichungsnummer: **0 176 900 B1**

(12) **EUROPÄISCHE PATENTSCHRIFT**

(45) Veröffentlichungstag der Patentschrift: **24.04.91**

(51) Int. Cl.[5]: **C09B 67/22**, C08K 5/34, //C09B67/48,C09B5/62

(21) Anmeldenummer: **85111992.5**

(22) Anmeldetag: **21.09.85**

(54) **Verfahren zur Herstellung von Mischkristallpigmenten auf der Basis von Perylentetracarbonsäurediimiden und deren Verwendung.**

(30) Priorität: **03.10.84 DE 3436206**

(43) Veröffentlichungstag der Anmeldung:
**09.04.86 Patentblatt 86/15**

(45) Bekanntmachung des Hinweises auf die Patenterteilung:
**24.04.91 Patentblatt 91/17**

(84) Benannte Vertragsstaaten:
**CH DE FR GB IT LI**

(56) Entgegenhaltungen:
**EP-A- 0 023 191**
**DE-A- 2 009 073**
**FR-A- 2 327 288**
**DE-A- 1 067 157**
**DE-B- 1 113 773**
**US-A- 3 554 776**

**CHEMICAL ABSTRACTS, Band 84, Nr. 24, 14. Juni 1976, Seiten 82-83, Zusammenfassung Nr. 166251s, Columbus, Ohio, US; & JP-A-76 07 025 (MITSUBISHI CHEMICAL INDUSTRIES CO., LTD) 21-01-1976 (Kat. D,A)**

(73) Patentinhaber: **HOECHST AKTIENGESELL-SCHAFT**
**Postfach 80 03 20**
**W-6230 Frankfurt am Main 80(DE)**

(72) Erfinder: **Spietschka, Ernst, Dr.**
**Kirchweg 3**
**W-6270 Idstein Taunus(DE)**
Erfinder: **Tröster, Helmut, Dr.**
**Am Erdbeerstein 44**
**W-6240 Königstein Taunus(DE)**

**EP 0 176 900 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von Mischkristallpigmenten auf der Basis von Perylentetracarbonsäurediimiden im Kristallgitter der α-Modifikation des Perylentetracarbonsäure-bis-3',5'-dimethylphenylimids und Verwendung der so erhaltenen Mischkristallpigmente zum Färben von organischen Polymeren.

Für den Einsatz in hochschmelzenden Kunststoffen sollen Pigmente nicht nur hohe Licht- und Wetterechtheiten aufweisen, sondern auch den bei der Verarbeitung auftretenden Temperaturen ohne Veränderung des Farbeindrucks widerstehen, d.h. auch eine ausreichende thermische Stabilität besitzen. Für dieses Einsatzgebiet besteht als Alternative zu den bislang überwiegend verwendeten Cadmium-Pigmenten in zunehmendem Maße Interesse für organische Farbmittel.

Die Palette an verfügbaren organischen Pigmenten für hochschmelzende synthetische Polymere, insbesondere Polyolefine, ist wegen der hohen Anforderung an die thermische Beständigkeit lückenhaft.

Zur Erzielung klarer Rottöne hat sich seit langem das Perylenpigment der Formel (1)

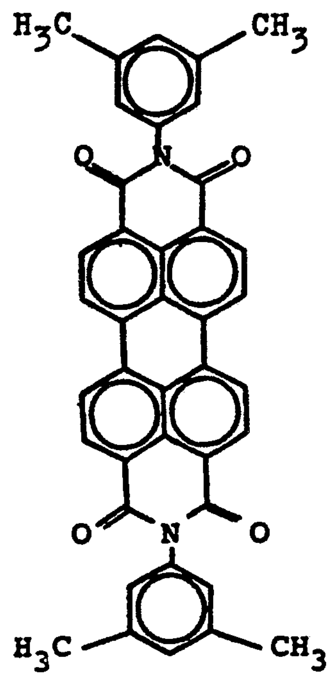

(1)

für das inredestehende Einsatzgebiet als besonders geeignet erwiesen. Diese nach der DE-PS 1 067 157 (US-PS 2 905 685) erhältliche Verbindung, die hierbei in einer in der Japanischen Patentanmeldung J 51007-025 und in der EP-PS 023 191 (US-PS 4 404 385) als a-Modifikation bezeichneten Kristallphase anfällt, ergibt, nach Überführung in eine feinteilige Pigmentform, beispielsweise durch übliche Vermahlung in einer Schwing- oder Rollmühle, eine reine Rotfärbung von hoher Farbstärke und guter thermischer Beständigkeit.

Der vermehrte Einsatz von hochschmelzenden Polymeren wie Polypropylen sowie der Trend zu höheren Produktionsgeschwindigkeiten bei Kunststoffartikeln führten in den letzen Jahren zu einer Verschärfung der Hitzebelastung und damit auch zur Forderung nach einer weiteren Steigerung der Hitzebeständigkeit dieses Pigmentes.

Außerdem wird von vielen Kunststoffverarbeitern seit längerem der Wunsch nach einem deutlich gelberen, farbstarken Rot mit entsprechendem Echtheitsniveau geäußert.

Mit dem seit langem bekannten Perylentetracarbonsäure-bis-4'-ethoxyphenylimid der Formel (3)

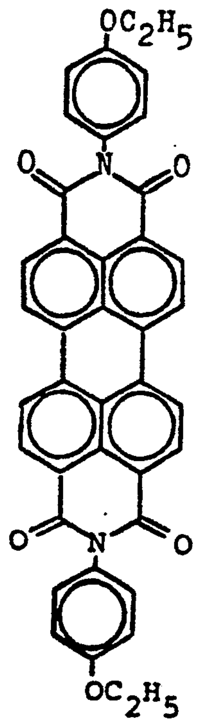

(3)

ist zwar ein solches klares, gelbstichiges Rot verfügbar. Die ungenügende thermische Stabilität dieses Pigments schließt jedoch einen Einsatz in hochschmelzenden Polymeren, in denen es bei den hohen Verarbeitungstemperaturen einen Farbtonumschlag nach blaustichig rot erleidet, aus.

Es wurde nun gefunden, daß man Perylentetracarbonsäurediimid-Mischkristallpigmente im Kristallgitter der α-Modifikation des Perylentetracarbonsäure-bis-3',5'-dimethylphenylimids der Formel (1), bestehend im wesentlichen aus dem symmetrischen Perylentetracarbonsäure-bis-3',5'-dimethylphenylimid der Formel (1) und mindestens einem asymmetrisch substituierten Diimid der Formel (2), worin R für die Methyl- oder Ethylgruppe steht,

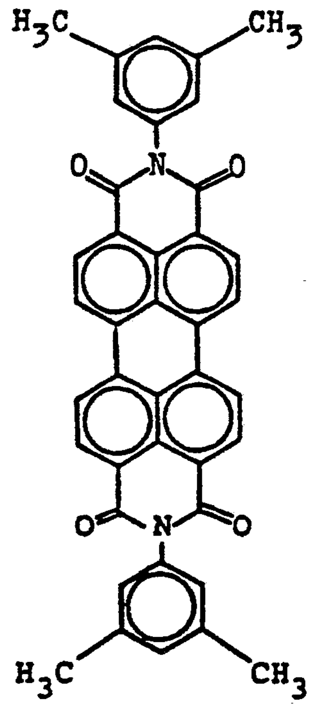

(1)

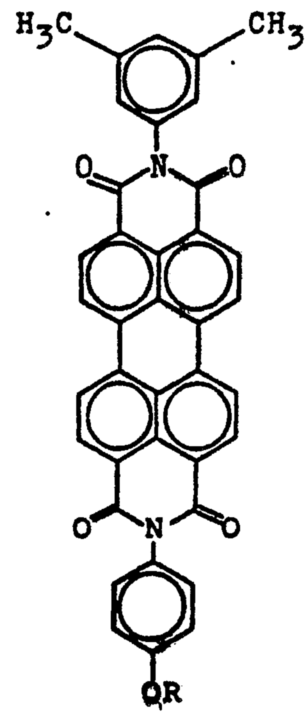

(2)

herstellen kann, indem man 1 mol Perylentetracarbonsäuredianhydrid mit einem Überschuss von bis zu 30 mol an 3,5-Dimethylanilin, welches insgesamt 0,5 - 6 Gewichtsprozent 4-Ethoxyanilin und/oder 4-Methoxyanilin enthält, kondensiert.

Die so erhältlichen Perylentetracarbonsäurediimid-Mischkristallpigmente ergeben nach Überführung in eine feinteilige Pigmentform nach üblichen Finish-Methoden, beispielsweise durch Vermahlen,in hochschmelzenden Polymeren, insbesondere in Polyethylen und Polypropylen, Ausfärbungen, die gegenüber dem reinen Pigment der genannten Formel (1) eine deutlich verbesserte thermische Stabilität und, insbesondere in den Fällen, in denen die Mischkristallkomponente der Formel (2) die Ethoxygruppe enthält, auch einen gewünschten gelberen Farbton aufweisen. Die Stärke der Gelbverschiebung läßt sich durch Variation der Menge von 4-Ethoxyanilin im 3,5-Dimethylanilin steuern. Eine geringerausgeprägte Nuancenverschiebung nach gelbstichig rot kann aber auch mit 4-Methoxyanilin erreicht werden.

Die kristallographische Modifikation ("α-Modifikation") des Perylentetracarbonsäure-bis-3',5'-dimethylphenylimids der Formel (1) weist das in FIGUR 1 (siehe Anhang) gezeigte Röntgenbeugungsdiagramm auf, während FIGUR 2 (siehe Anhang) das Röntgenbeugungsdiagramm eines typischen erfindungsgemäß erhältlichen Mischkristalls zeigt. Wie daraus ersichtlich, handelt es sich um übereinstimmende Röntgenbeugungsdiagramme und damit um übereinstimmende Kristallgitter.

Die Mischkondensation wird zweckmäßigerweise mit mindestens 2 mol 3,5-Dimethylanilin pro mol Perylentetracarbonsäuredianhydrid durchgeführt. Bevorzugt wird ein Überschuß von 4 - 16 mol 3,5-Dimethylanilin angewandt. Die Anwendung eines größeren Überschusses an 3,5-Dimethylanilin ist zwar möglich, aus wirtschaftlichen Gründen aber nicht sinnvoll.

Der bevorzugte Gehalt des 3,5-Dimethylanilins an 4-Ethoxyanilin und/oder 4-Methoxyanilin liegt zwischen etwa 1 und etwa 3 Gewichtsprozent. Bevorzugt kommt 4-Ethoxyanilin zur Anwendung.

Die Mischkondensationsreaktion kann in bekannter Weise, beispielsweise gemäß den Angaben der DE-PS 1 105 085 (GB-PS 897 707), DE-AS 1 094 897 oder der bereits genannten DE-PS 1 067 157 (US-PS 2 905 685) durchgeführt werden, indem man das Gemisch der Reaktanden bei erhöhter Temperatur von etwa 150 - 220 °C, gegebenenfalls in Gegenwart eines Kondensationshilfsmittels, in einem hochsiedenden Lösungsmittel, wie beispielsweise Di- oder Trichlorbenzol, Nitrobenzol, N-Methylpyrrolidon, Chinolin, Phenolen oder im Überschuß von 3,5-Dimethylanilin umsetzt.

Die Reaktionsprodukte können in üblicher Weise durch Filtration,gegebenenfalls nach vorherigem Verdünnen mit einem niedrigsiedenden Alkohol, wie Methanol, abgetrennt werden. Die Zusammensetzung der erhaltenen Mischkristall-Reaktionsprodukte ist sowohl abhängig vom Gehalt an 4-Alkoxyanilin im 3,5-Dimethylanilin als auch vom angewandten Überschuß an 3,5-Dimethylanilin. Sie bestehen im wesentlichen aus etwa 99-70 Molprozent an symmetrischem Diimid der Formel (1) und etwa 1-30 Molprozent an asymmetrischem Diimid der Formel (2).

Bevorzugt sind solche Mischkristallverbindungen, die im wesentlichen aus etwa 99-85 Molprozent an symmetrischem Diimid der Formel (1) und etwa 1-15 Molprozent an asymmetrischem Diimid der Formel (2) zusammengesetzt sind und in denen der Substituent R in Formel (2) für die Ethylgruppe steht.

Zur Überführung in eine feinteilige, transparent färbende Pigmentform kann das erhaltene trockene Rohpigment nach üblichen Mahlverfahren, beispielsweise in einer Schwing- oder Rollmühle, in Gegenwart von Mahlhilfsmitteln gemahlen werden. Als Mahlkörper dienen hierbei im allgemeinen Stahl- oder Korundkugeln oder Stahl- oder Korundcylpebs. Mahlhilfsmittel können wasserlösliche Salze, wie Natriumsulfat, Aluminiumsulfat oder Natriumchlorid, sein, die nach beendeter Mahlung in bekannter Weise durch wäßrigen Salzauszug vom Pigment abgetrennt werden.

Mischkristallpigmente der Perylentetracarbonsäurediimidreihe sind bereits bekannt. So werden in der US-PS 3 554 776 Pigmente, bestehend aus einer festen Lösung von mindestens zwei Perylentetracarbonsäurediimiden beansprucht.

Bei den diesen Pigmenten zugrundeliegenden Verbindungen handelt es sich um symmetrisch N,N'-substituierte Perylentetracarbonsäurediimide. Demgegenüber unterscheiden sich die erfindungsgemäß erhältlichen Mischkristalle, bei denen die eine Komponente der Formel (2) ein asymmetrisch substituiertes Diimid darstellt, durch ihre andersartige chemischeZusammensetzung. Entsprechendes gilt auch für die aus der DE-0S 2 009 073 (Canadische Patentschrift 912 757) bekanntgewordenen festen Lösungen von Perylentetracarbonsäurediimid-Pigmenten. Auch bei diesen Pigmenten handelt es sich um Mischungen, die aus symmetrisch N,N'-substituierten Perylentetracarbonsäurediimiden zusammengesetzt sind.

Es war nicht zu erwarten, daß durch die erfindungsgemäße Mischkondensationsreaktion neben dem symmetrisch substituierten Perylimid der Formel (1) im wesentlichen nur die asymmetrisch substituierten Perylimide der Formel (2) gebildet würden.

Die neuen erfindungsgemäß erhältlichen Mischkristallpigmente eignen sich zum Einfärben von Lacken, Kunststoffen, wie Polyvinylchlorid, Polystyrol oder Polyamid, und besonders vorteilhaft zum Pigmentieren von hochschmelzenden Polymeren, wie Polyethylen und Polypropylen, sowie für das Spinnfärben von Polypropylen. Sie weisen gegenüber dem beispielsweise gemäß der DE-PS 1 067 157 (US-PS 2 905 685) erhältlichen Perylenpigment der Formel 1 bei gleicher Kristallmodifikation - nach entsprechender Überführung in eine feinteilige, transparent färbende Pigmentform - in hochschmelzenden organischen Polymeren, insbesondere in Polyolefinen, bei ebenbürtiger Farbstärke und gelberem Farbton eine deutlich höhere Hitzestabilität auf.

Den aus der DE-AS 2 832 761 (US-PS 4 262 851) und der EP-PS 042 819 (US-PS 4 404 386) bekannten, deckend färbenden Pigmentformen des Bisxylidids der Formel (1) sind sie bei wesentlich gelberem, reinerem Farbton in der Farbstärke überlegen.

In den nachfolgenden Beispielen beziehen sich die Prozentangaben, sofern nicht anders vermerkt, auf das Gewicht.

Die Röntgenbeugungsdiagramme wurden mit einem rechnergesteuertenPulverdiffraktometer D 500 der Firma SIEMENS mit Kupfer-Ku-Strahlung aufgenommen.

Die Aufnahme der Massenspektren erfolgte mit einem doppelfokusierenden Massenspektrometer MS 50 der Firma KRATOS. (Elektronenstossionisation, 70 eV, 380 °C).

## Beispiel 1

62,0 g (0,158 mol) Perylentetracarbonsäuredianhydrid werden in einem Gemisch aus 200 g (1,65 mol) 3,5-Dimethylanilin, 2,1 g (0,015 mol) 4-Ethoxyanilin und 466 g Chinolin nach Zugabe von 4,3 g wasserfreiem Zinkchlorid unter Rühren 7 Stunden bei 185 °C gehalten. Das ausgefallene Reaktionsprodukt wird bei 100 °C abgesaugt, anschließend mit Methanol, dann mit 2 %iger Salzsäure und schließlich mit Wasser neutral gewaschen. Der Nutschkuchen wird danach mit 2 %iger Kalilauge bis zum farblosen Filtratablauf und mit Wasser neutral gewaschen und getrocknet. Man erhält 93,3 g des rein gelbstichigroten, einheitlich kristallinen Mischkondensationsprodukts in der $\alpha$-Modifikation (vergl. FIGUR 2).

Im Massenspektrum ist neben dem Hauptmassenpeak $M^+$ 598 (Komponente der Formel (1)) der Massenpeak $M^+$ 614 der asymmetrischen Komponente (Formel 2) deutlich erkennbar. Die Molmasse 630 der symmetrischen Verbindung (Formel 3) wird nicht gefunden.

Zur Überführung in eine feinteilige Pigmentform werden 30 g Mischkondensationsprodukt mit 150 g Natriumsulfat wasserfrei in einem 1 l Kunststoffmahlbehälter mit 1400 g Korundkugeln ($\phi$ 12mm) auf einem

Vibratom-Schwingtisch 6 Stunden vermahlen und das Mahlgut nach einem wäßrigen Salzauszug getrocknet und in einer IK-Schlagkreuzmühle (der Firma JANKE und KUNKEL) aufgemahlen. (In gleicher Weise werden auch die nach den Folgebeispielen erhaltenen Produkte zerkleinert).

Beispiel 2

Eine Mischung aus 39,2 g (0,1 mol) Perylentetracarbonsäuredianhydrid, 2,0 g Zinkchlorid wasserfrei, 121 g (1,0 mol) 3,5-Dimethylanilin, 200 g Chinolin und 2,75 g (0,02 mol) 4-Ethoxyanilin wird 8 Stunden bei 180 - 185 °C gerührt. Das gebildete, einheitlich kristalline Reaktionsprodukt wird gemäß den Angaben des Beispiels 1 isoliert. Es werden 58,8 g rote Mischkristalle der α-Modifikation erhalten.
Im Massenspektrum ist der Massenpeak $M^+$ 598 (Komponente der Formel (1) und der Massenpeak $M^+$614 (Komponente der Formel (2)) erkennbar. Die Molmasse 630 der Verbindung der Formel (3) wird nicht gefunden.

Beispiel 3

Eine Suspension von 39,2 g (0,1 mol) Perylentetracarbonsäuredianhydrid in 99,5 g (0,8 mol) 3,5-Dimethylanilin mit einem Gehalt von 2,7 Gewichtsprozent 4-Ethoxyanilin und 96,8 g Phenol wird in 8 Stunden bei 175 - 180 °C umgesetzt. Nach üblicher Isolierung werden 59,1 g gelbstichig rotes Mischkondensationsprodukt in der α-Kristallmodifikation erhalten. Im Massenspektrum ist der Massenpeak $M^+$598 (Komponente der Formel (1)) und der Massenpeak $M^+$614 (Komponente der Formel (2)) zu sehen. Die Molmasse 630 der Verbindung der Formel (3) ist nur im Spurenbereich erkennbar.

Beispiel 4

39,2 g Perylentetracarbonsäuredianhydrid werden in einer Mischung aus 48,4 g 3,5-Dimethylanilin, 3,1 g 4-Methoxyanilin, 200 g Chinolin und 4,1 g Zinkchlorid wasserfrei 10 Stunden bei 180 - 190 °C zur Reaktion gebracht. Nach üblicher Aufarbeitung werden 59,3 g Mischkristalle der α-Kristallmodifikation isoliert.

Beispiel 5

98,0-g Perylentetracarbonsäuredianhyrid werden mit 497 g 3,5-Dimethylanilin mit einem Gehalt von 2,7 Gewichtsprozent 4-Ethoxyanilin in Gegenwart von 10,2 g wasserfreiem Zinkchlorid bei 190 °C umgesetzt. Nach 8 Stunden Reaktionsdauer wird bei Raumtemperatur mit 500 ml Methanol verdünnt und das Mischkondensationsprodukt in bekannter Weise isoliert. Es werden 149,3 g in der α-Kristallphase erhalten.

Der massenspektroskopische Befund entspricht dem von Beispiel 3.

Beispiel 6

Verwendet man anstelle von 2,75 g 4-Ethoxyanilin die äquivalente Menge von 4-Methoxyanilin und verfährt im übrigen wie in Beispiel 2 beschrieben, so erhält man nach der Isolierung 58,9 g Mischkondensationsprodukt der α-Kristallmodifikation.

Beispiel 7

Ein Gemisch aus 78,4 g (0,2 mol) Perylentetracarbonsäuredianhydrid, 387 g (3,15 mol) 3,5-Dimethylanilin und 12,0 g 4-Methoxyanilin wird in Gegenwart von 8,1 g wasserfreiem Zinkchlorid in 7 Stunden bei 180 - 190 °C umgesetzt. Das entstandene Reaktionsprodukt wird dann in bekannter Weise abgetrennt. Die Ausbeute des in der α-Phase vorliegenden Mischkondensationsproduktes beträgt 118,2 g.

Beispiel 8 (Vergleichsbeispiel)

62,0 g Perylentetracarbonsäuredianhydrid werden in 210 g 3,5-Dimethylanilin in Gegenwart von 3,2 g wasserfreiem Zinkchlorid 8 Stunden bei 185 °C gerührt und das entstandene Bisxylidid der Formel (1) in üblicher Weise isoliert. Die Ausbeute beträgt 92,5 g (97,9 % der Theorie). Die Reflexionswinkel im Röntgenbeugungsdiagramm (vgl. FIGUR 1) stimmen mit den aus der vorstehend genannten japanischen Patentanmeldung bekanntgewordenen Winkeldaten der als α-Modifikation bezeichneten Kristallphase dieser Verbindung überein.

Bestimmung der Hitzebeständigkeit gemäß Prüfung DIN 53772-A

0,75 g des zu prüfenden Pigments und 500 g Polyethylen (®Hostalen GG 7260 Pulver) werden in einem Collin-Schnellmischer bei Raumtemperatur 1 Minute bei 2000 Umdrehungen pro Minute gemischt. Nach Zugabe von 7,14 g ®Remafin-Weiß RCL-AE 30 (≙ 1 % $TiO_2$) wird die Mischung auf einem Extruder (Weber ET 20) in 2 Passagen bei 180 °C extrudiert. Das erhaltene Granulat wird anschließend auf einer Spritzgießmaschine (Aarburg Allrounder 221 E/170 P) bei Prüftemperaturen von 200 - 300 °c in Intervallen von jeweils 20 °C und einer Verweildauer von 5 Minuten zu Platten verspritzt.

Ergebnisse (Standardfarbtiefe 1/3 nach DIN 53235)

| Beispiel | Hitzebeständigkeit (Farbabstand $\Delta E^*_{ab}$ = 3) | Bunttonwinkel (DIN 6174) |
|---|---|---|
| 1 | > 300°C | 24,9° |
| 2 | > 300°C | 25,6° |
| 3 | > 300°C | 25,1° |
| 4 | > 300°C | 23,9° |
| 5 | > 300°C | 25,6° |
| 6 | > 300°C | 24,1° |
| 7 | > 300°C | 24,2° |
| 8 (Vergleich) | 270°C | 23,3° |

Die Ergebnisse der vorstehenden Tabelle zeigen die überlegene Hitzebeständigkeit sowie den gelberen Farbton der erfindungsgemäßen Mischkristallpigmente gegenüber dem reinen Perylenpigment der Formel 1.

**Ansprüche**

1. Verfahren zur Herstellung von Perylentetracarbonsäurediimid-Mischkristallpigmenten im Kristallgitter der α-Modifikation des Perylentetracarbonsäure-bis-3',5'-dimethylphenylimids der Formel (1), bestehend im wesentlichen aus dem symmetrischen Perylentetracarbonsäure-bis-3', 5'-dimethylphenylimid der Formel (1) und mindestens einem asymmetrisch substituierten Diimid der Formel (2), worin R für die Methyl- oder Ethylgruppe steht,

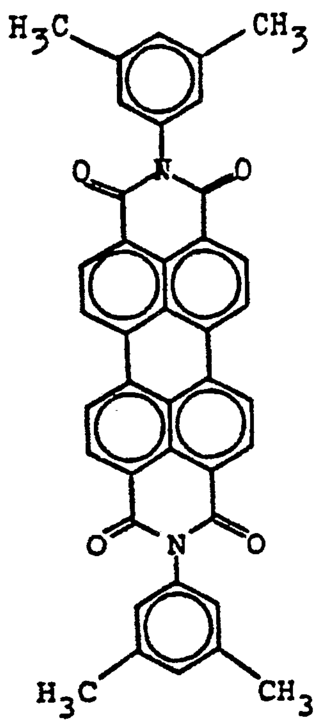

(1)

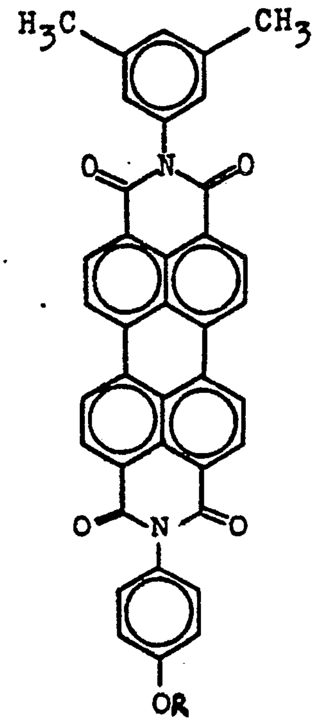

(2)

dadurch gekennzeichnet, daß man 1 mol Perylentetracarbonsäuredianhydrid mit einem Überschuß von bis zu 30 mol 3,5-Dimethylanilin, welches insgesamt 0,5 - 6 Gewichtsprozent 4-Ethoxyanilin und/oder 4-Methoxyanilin enthält, kondensiert.

2. Verfahren nach Anspruch 1, dadurch gekennzeichnet, daß man 2 bis 16 mol 3,5-Dimethylanilin pro mol Perylentetracarbonsäuredianhydrid einsetzt.

3. Verfahren nach Anspruch 1 oder 2, dadurch gekennzeichnet, daß man eine Mischung bestehend aus 99 - 97 Gewichtsprozent 3,5-Dimethylanilin und 1 - 3 Gewichtsprozent 4-Ethoxyanilin einsetzt.

4. Verfahren nach Anspruch 1 oder 2, dadurch gekennzeichnet, daß man eine Mischung bestehend aus 98-94 Gewichtsprozent 3,5-Dimethylanilin und 2-6 Gewichtsprozent 4-Methoxyanilin einsetzt.

5. Verwendung der nach Ansprüchen 1 - 4 erhaltenen Verfahrensprodukte zum Färben von organischen Polymeren.

## Claims

1. A process for preparing perylenetetracarbimide mix-crystal pigments in the crystal lattice of the α-modification of the N,N'bis-3',5'-dimethylphenylperylenetetracarbimide of the formula (1) comprising essentially symmetrical N,N'-bis-3',5'-dimethylphenylperylenetetracarbimide of the formula (1) and at least one asymmetrically subsituted diimide of the formula (2) in which R stands for a methyl or ethyl group

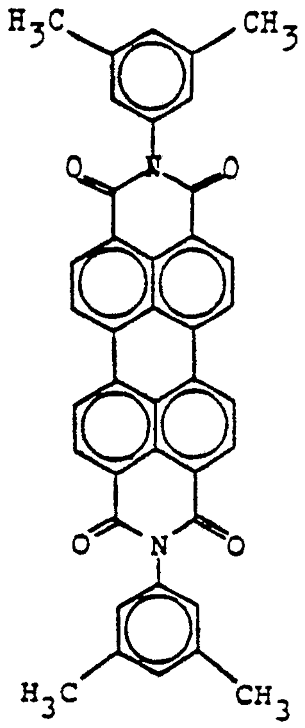

(1)

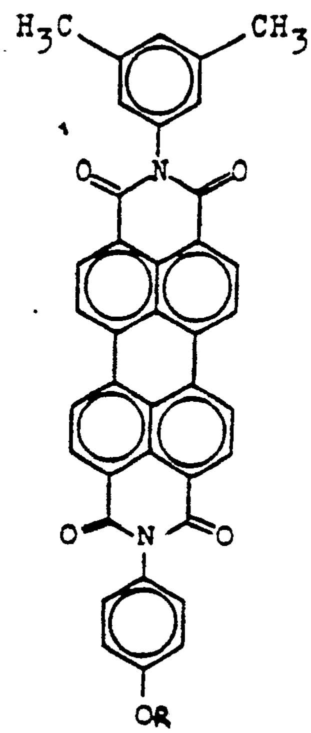

(2)

which comprises condensing 1 mole of perylenetetracarboxylic dianhydride with an excess of up to 30 moles of 3,5-dimethylaniline which contains in total 0.5 - 6 percent by weight of 4-ethyoxyaniline and/or 4-methoxyaniline.

2. The process as claimed in claim 1, wherein 2 to 16 moles of 3,5-dimethylaniline are used per mole of perylenetetracarboxylic dianhydride.

3. The process as claimed in claim 1 or wherein a mixture comprising 99 - 97 percent by weight of 3,5-dimethylaniline and 1 - 3 percent by weight of 4-ethoxyaniline is used.

4. The process as claimed in claim 1 or 2 wherein a mixture comprising 98 - 94 percent by weight of 3,5-dimethylaniline and 2 - 6 percent by weight of 4-methoxyaniline is used.

5. Use of the process products obtained as claimed in claims 1 - 4, for coloring organic polymers.

**Revendications**

1. Procédé pour préparer des pigments en cristaux mixtes à base de di-imides de l'acide pérylène-tétracarboxylique dans le réseau cristallin de la modification α du bis-(diméthyl-3,5 phényl)-imide de l'acide pérylène-tétracarboxylique de formule 1, pigments essentiellement constitués du bis-(diméthyl-3,5 phényl)-imide de l'acide pérylène-tétracarboxylique symétrique répondant à la formule 1 et d'au moins un di-imide asymétriquement substitué répondant à la formule 2 dans laquelle R représente un radical méthyle ou éthyle :

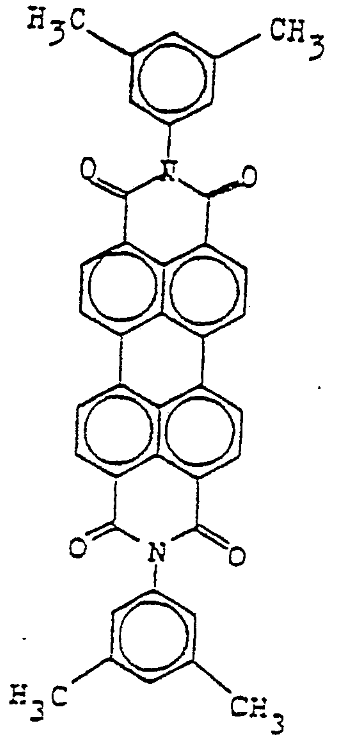

(1)

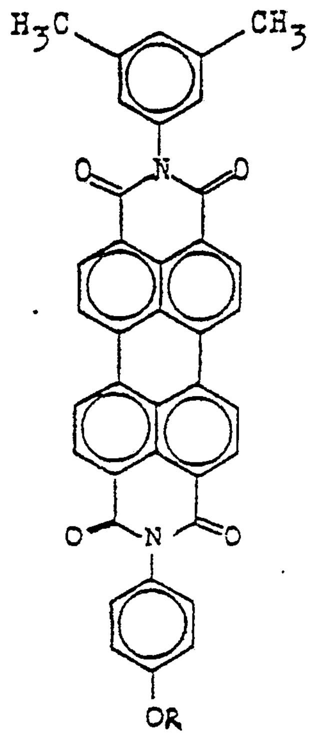

(2),

procédé caractérisé en ce qu'on condense 1 mol de dianhydride de l'acide pérylène-tétracarboxylique avec un excès pouvant aller jusqu'à 30 mol de diméthyl-3,5 aniline contenant au total de 0,5 à 6 % en poids d'éthoxy-4 aniline et/ou de méthoxy-4 aniline.

**2.** Procédé selon la revendication 1 caractérisé en ce qu'on utilise de 2 à 16 mol de diméthyl-3,5 aniline par mole de dianhydride de l'acide pérylène-tétracarboxylique.

**3.** Procédé selon l'une des revendications 1 et 2, caractérisé en ce qu'on utilise un mélange constitué de 99 à 97 % en poids de diméthyl-3,5 aniline et de 1 à 3 % en poids d'éthoxy-4 aniline.

**4.** Procédé selon l'une des revendications 1 et 2, caractérisé en ce qu'on utilise un mélange constitué de 98 à 94 % en poids de diméthyl-3,5 aniline et de 2 à 6 % en poids de méthoxy-4 aniline.

**5.** Application des produits obtenus par un prccédé selon l'une quelconque des revendications 1 à 4 à la coloration de polymères organiques.

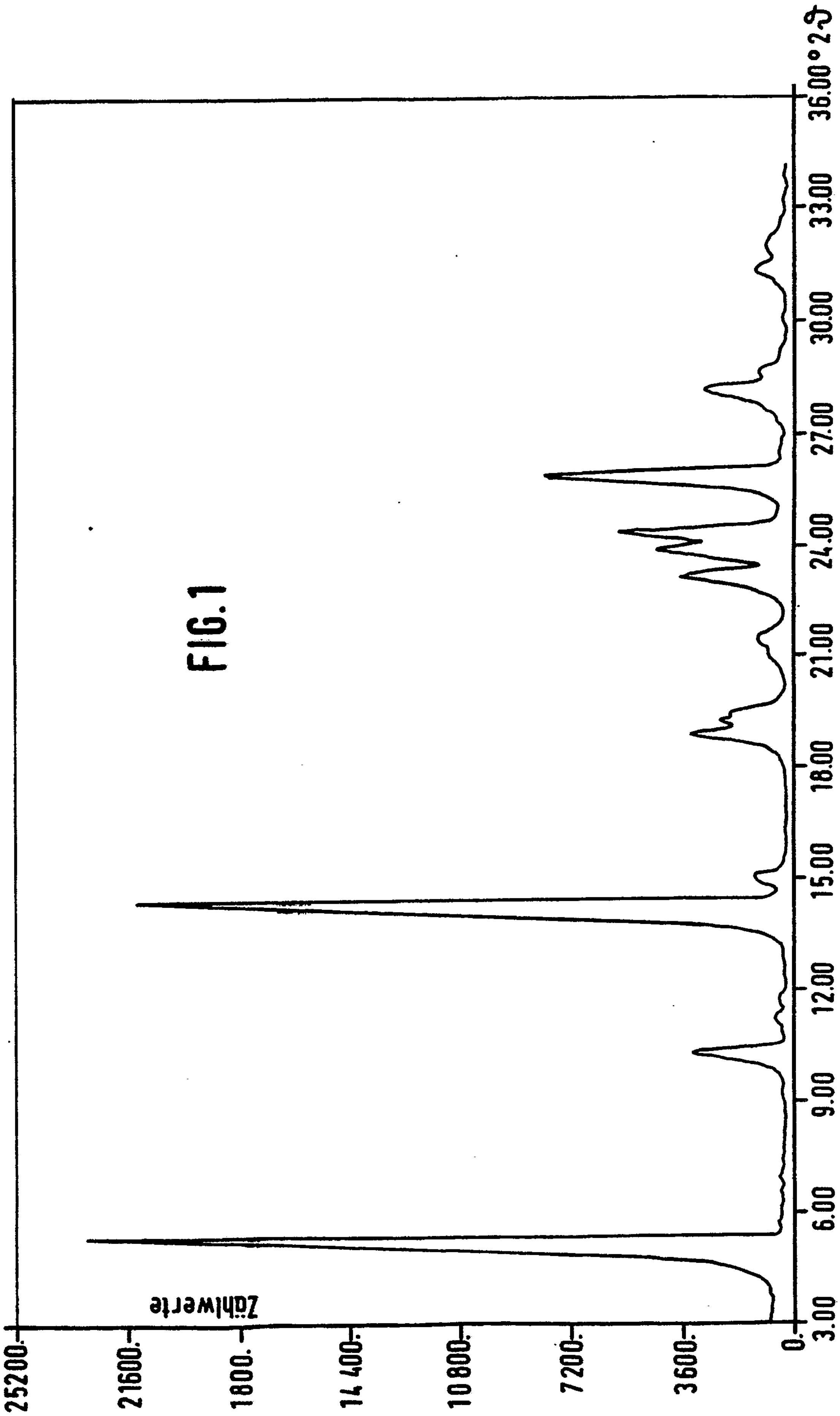
25200
21600
1800
14 400
10 800
7200
3600
0
Zählwerte
3.00
6.00
9.00
12.00
15.00
18.00
21.00
24.00
27.00
30.00
33.00
36.00 °2ϑ

FIG. 1

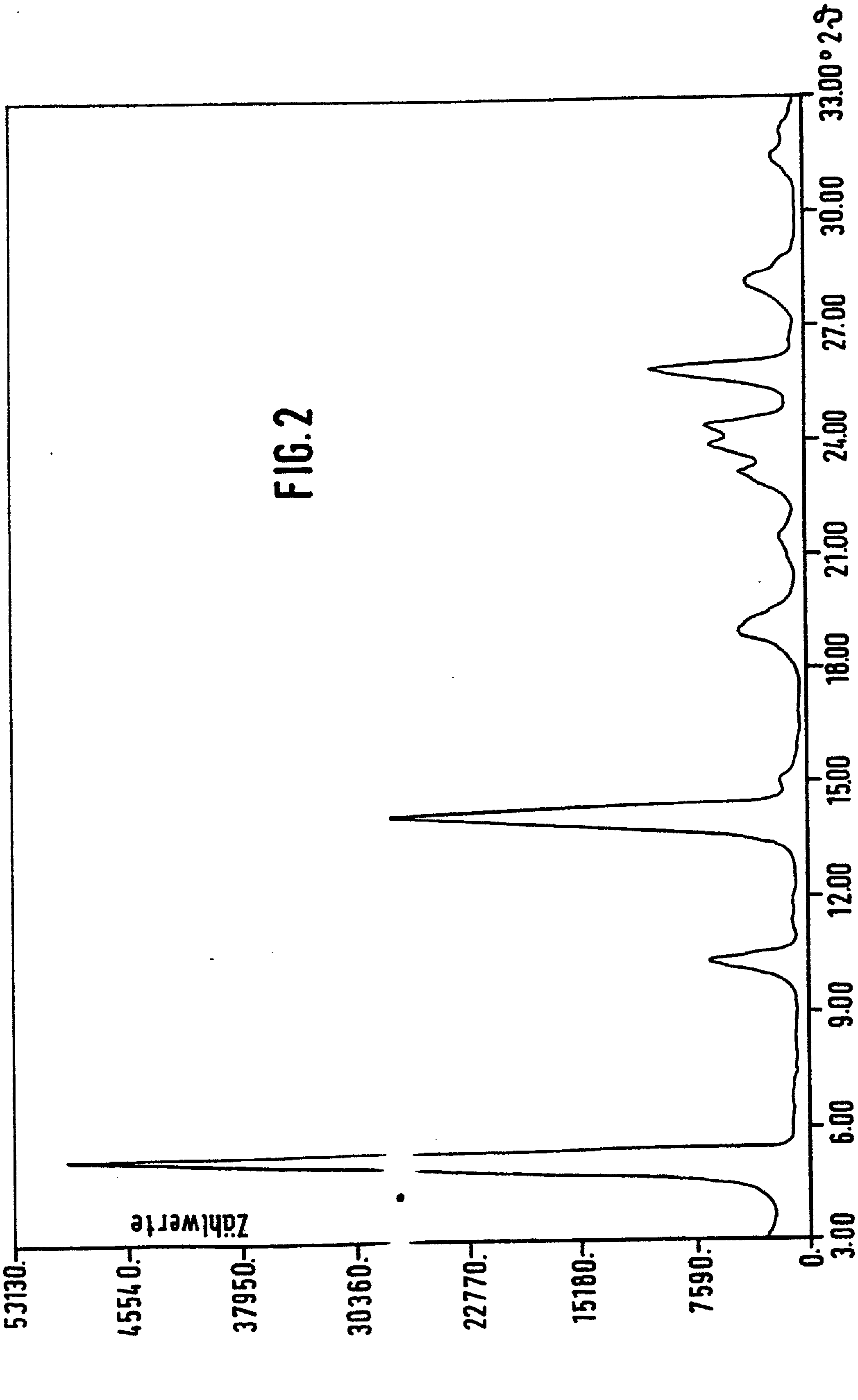
53130.
4554 0.
37950.
30360.
22770.
15180.
7590.
0.
Zählwerte
3.00
6.00
9.00
12.00
15.00
18.00
21.00
24.00
27.00
30.00
33.00 ° 2ϑ

FIG. 2